# EUROPÄISCHE PATENTANMELDUNG

(11) **EP 1 310 710 A2**
(43) Veröffentlichungstag der Anmeldung: **14.05.2003**
(21) Anmeldenummer: 02019525.1
(22) Anmeldetag: 31.08.2002
(51) Int. Cl.: F16J 15/34

(54) **Gleitringdichtung**

(30) Priorität: 13.11.2001 DE 10155653
(71) Anmelder: Federal-Mogul Friedberg GmbH, 86316 Friedberg (DE)
(72) Erfinder: Göbbels, Franz-Josef, Dipl.-Ing., 51399 Burscheid (DE)

(57) **Zusammenfassung**

Gleitringdichtung, insbesondere Laufwerkdichtung, umfassend einen winkelförmigen Gleit- und Gegenring (2), die mit Ihren radialen Dichtschenkeln eine Dichtfläche (1) bilden, und aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes (2) angeordnet sind, für eine flüssigkeitsdichte Abdichtung zwischen einer Welle und einem Gehäuse, wobei die Gleit- und Gegenringe (2) geteilt ausgeführt sind, so dass sich eine Trennfuge (6, 7) bildet und dass die Trennfüge (6, 7) als Bruchfläche vorliegt und dass die Trennfüge (6, 7) diametral versetzt angeordnet ist.

## Beschreibung

Die Erfindung beschreibt eine Gleitringdichtung, insbesondere Laufwerkdichtung, umfassend einen winkelförmigen Gleit- und Gegenring, die mit ihren radialen Dichtschenkeln eine Dichtfläche bilden und aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes angeordnet sind, für eine flüssigkeitsdichte Abdichtung zwischen einer Welle und einem Gehäuse, wobei die Gleit- und Gegenringe geteilt ausgeführt sind, so dass sich eine Trennfuge bildet und dass die Trennfuge als Bruchfläche vorliegt.

Laufwerkdichtungen als spezielle Ausführung von Gleitringdichtungen kommen dann zum Einsatz, wenn es betriebsbedingt zu starken Verschmutzungen an den Aggregaten, Maschinen oder Anlagen kommen kann. Die Abdichtung erfolgt dabei zwischen den Gleitflächen des Gleit- und Gegenringes.
Je nach konstruktiver Gegebenheit in den Anlagen und Gehäusen kann es unabdingbar sein, dass Gleit- und Gegenring geteilt ausgeführt werden, d. h. die Ringe müssen radial getrennt werden, so dass sich zwei im wesentlichen identische Hälften ergeben. Durch die Teilung der Gleit- und Gegenringe bildet sich dann zwischen den beiden Hälften und im montierten Zustand eine Trennfuge aus.

Eine mechanische Flächendichtung mit geteilten Laufringen für eine flüssigkeitsdichte Abdichtung ist in der EP 0 458 352 B1 beschrieben. Es handelt sich hierbei um Laufringe mit nahezu quadratischem Querschnitt, die an ihrem axialen Ende mit einer Kerbe versehen sind, die diametral geteilt ausgeführt sind.
Zur Teilung der Laufringe wird auf die Kerben ein Druck ausgeübt, der kontinuierlich erhöht wird bis die Laufringe definiert an den Kerben zerbrechen. Die Bruchflächen werden keiner weiteren Bearbeitung unterzogen, da sie beim Fügen nahezu wie ein Labyrinth eine gute Dichtung gewährleisten. Nun kann es nicht immer garantiert werden, dass die Bruchflächen beim Fügen ideal und bündig übereinander liegen, so dass es zu Unebenheiten auf der Dichtfläche der Laufringe kommen kann.
Sind nun die Trennfugen diametral gegeneinander ausgerichtet, kann es passieren, dass sich zwei Unebenheiten enthaltene Bruchflächen gegenüberliegen und sich ineinander verhaken. Es besteht weiterhin die Gefahr, dass sollte die Welle, Achse, etc. um ihre Längsachse kippen und die Bruchflächen ständen übereinander, dass die Laufringe über die Bruchfläche verschoben werden. Dies alles kann zu einer Fehlfunktion führen oder schlimmstenfalls zur Zerstörung der mechanischen Flächendichtung.

Es ist daher Aufgabe der Erfindung die oben genannten technischen Nachteile zu überwinden und eine Gleitringdichtung, insbesondere Laufwerkdichtung, zu entwickeln, die ein gefahrloses Gleiten von geteilten Gleit- und Gegenringen ermöglicht.

Diese Aufgabe wird erfindungsgemäß durch den kennzeichnenden Teil des Patentanspruchs 1 gelöst, vorteilhafte Weiterbildungen der Erfindung sind in den Unteransprüchen dokumentiert.

Der erfindungsgemäße Gedanke überwindet die vorgenannten technischen Nachteile dadurch, dass die Trennfuge diametral versetzt angeordnet ist.

Durch den erfindungsgemäßen Gedanken kann nun eine geteilte Gleitringdichtung gefertigt werden, ohne dass die Gefahr eines Verhakens der Gleitringe auf der Lauffläche besteht. Dazu werden der Gleit- bzw. Gegenring diametral versetzt geteilt. So kann erfindungsgemäß der Gegenring eine diametrale Teilung die um 190° versetzt angeordnet ist und der Gleitring eine diametrale Teilung die um 170° versetzt angeordnet ist erfahren. Bei einem Fügen von Gleit- und Gegenring kann es somit nicht mehr vorkommen, dass sich die Trennfugen gegenüberstehen.

Ein weiterer Vorteil dieser Gleitringdichtung, insbesondere Laufwerkdichtung, ist es, dass Gleit- und Gegenring über einen elastomeren Dichtkörper gespannt werden. Dieser Dichtkörper soll eine etwa O-förmige Querschnittsform aufweisen. Dies bietet den Vorteil, dass einerseits die Vorspannung die Montage erleichtert und andererseits über die Abrollbewegung des O-förmigen Dichtkörpers Kippmomente und axiales Spiel ausgeglichen werden können.

Zur Teilung der Gleit- und Gegenringe werden an der Innenumfangsoberfläche Kerben eingebracht. Da diese Kerben nicht mit dem elastomeren Dichtkörpern in Berührung kommen ergibt sich auch hier ein Vorteil gegenüber dem Stand der Technik, nämlich der, dass bei der Montage oder während des Einsatzes der Gleitringdichtung zu keiner Beschädigungen am Dichtkörper kommen kann.

Die Teilung erfolgt mittels eines Sprengens der Gleit- bzw. Gegenringe, hierzu werden in die Gleit- bzw. Gegenringe zwei Hälften eine Scheibe eingelegt, die an ihrer äußeren Umfangsfläche dem Innendurchmesser der Gleit- bzw. Gegenringe folgen und in der Mitte beabstandet sind. Dieser Abstand bildet einen Spalt in den ein keilförmiges Werkzeug stoßartig eingetrieben wird, wobei Spalt und Kerbe in etwa übereinstimmen. Die stoßartige Belastung führt zu einem Sprengen oder Auseinanderreißen der Gleit- bzw. Gegenringe. Da die Gleit- bzw. Gegenringe vornehmlich aus Gußlegierungen oder legierten Stählen gefertigt werden bildet sich bei dieser Art des Trennens ein Sprödbruch aus.
Das Sprengen der Gleit- bzw. Gegenringe bietet den Vorteil, dass die Kerben nicht direkt belastet werden, während es bei einem Aufbringen einer kontinuierlich gesteigerten Last zu einer Kaltverformung im Bereich der Kerben kommen kann. Diese Kaltverformung hat aber einen negativen Einfluss auf die Qualität der Fügeflächen und kann zu Undichtigkeiten im Bereich der Trennflächen führen.

Ein erfindungsgemäßes Gestaltungsbeispiel der Gleitringdichtung wird nachstehend anhand einer Zeichnungen und im weiteren in der Beschreibung näher erläutert. Es zeigt:

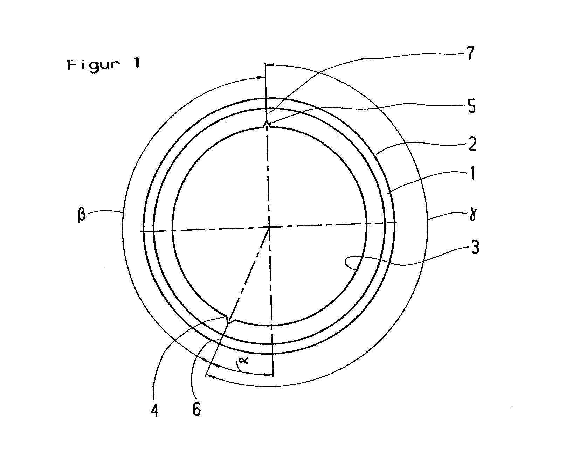

- Figur 1: eine Draufsicht auf die Dichtfläche einer erfindungsgemäß ausgestalteten Gleitringdichtung,

Die Figur 1 zeigt eine Draufsicht auf die Dichtfläche 1 einer erfindungsgemäß ausgestalteten Gleit- oder Gegenringes 2. An der Innenumfangsoberfläche 3 der Gleitoder Gegenringe 2 sind Kerben 4, 5 eingearbeitet, die als Sollbruchstellen dienen. Die Kerben 4, 5 sind diametral versetzt angeordnet, wobei die Kerbe 5 um den Winkel α versetzt angeordnet ist. So kann beispielsweise die Kerbe 5 im Gleitring um den Winkel β und im Gegenring die Kerbe 5 um den Winkel γ versetzt angeordnet sein. Ausgehend von den Kerben 4, 5 bilden sich die radial nach außen verlaufenden Trennfugen 6, 7 aus.

## Patentansprüche

1. Gleitringdichtung, insbesondere Laufwerkdichtung, umfassend einen winkelförmigen Gleit- und Gegenring (2), die mit Ihren radialen Dichtschenkeln eine Dichtfläche (1) bilden, und aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes (2) angeordnet sind, für eine flüssigkeitsdichte Abdichtung zwischen einer Welle und einem Gehäuse, wobei die Gleit- und Gegenringe (2) geteilt ausgeführt sind, so dass sich eine Trennfuge (6, 7) bildet und dass die Trennfuge (6, 7) als Bruchfläche vorliegt, **dadurch gekennzeichnet, dass** die Trennfuge (6, 7) diametral versetzt angeordnet ist.

2. Gleitringdichtung nach Anspruch 1, **dadurch gekennzeichnet, dass** die Trennfuge (6, 7) in Gleit- und Gegenring (2) um 180° bis etwa ±10° versetzt angeordnet ist.

3. Gleitringdichtung nach einem der Ansprüche 1 und 2, **dadurch gekennzeichnet, dass** der Gleit- und Gegenring (2) durch den elastomeren Dichtkörper, insbesondere durch einen O-förmigen Dichtkörper, in der Betriebsposition gehalten ist.

4. Gleitringdichtung nach einem der Ansprüche 1 bis 3, **dadurch gekennzeichnet, dass** Gleit- und Gegenring (2) und der elastomere Dichtkörper mittels einer geteilt ausgeführten Aufnahme in der Betriebsposition gehalten wird.

5. Gleitringdichtung nach einem der Ansprüche 1 bis 4, **dadurch gekennzeichnet, dass** die Bruchfläche als Sprödbruchfläche vorliegt.

6. Gleitringdichtung nach einem der Ansprüche 1 bis 5, **dadurch gekennzeichnet, dass** die Gleit- und Gegenringe (2) an der inneren Umfangsoberfläche (3) und an der Trennfuge (6, 7) mit mindestens zwei diametral versetzt angeordneten Sollbruchstellen, insbesondere mit Kerben (4, 5), ausgestattet sind.

7. Gleitringdichtung nach einem der Ansprüche 1 bis 6, **dadurch gekennzeichnet, dass** die Teilung der Gleit- und Gegenringe (2) mechanisch, insbesondere mittels eines Sprengens, und ausgehend von den Kerben (4, 5) in der Innenumfangsoberfläche (3) erfolgt.

8. Gleitringdichtung nach einem der Ansprüche 1 bis 7, **dadurch gekennzeichnet, dass** die Kerben (4, 5) in die Gleit- und Gegenringe (2) eingegossen sind.
